# EUROPÄISCHE PATENTSCHRIFT

(11) **EP 1 000 660 B1**
(45) Veröffentlichungstag und Bekanntmachung des Hinweises auf die Patenterteilung: **02.03.2005**
(21) Anmeldenummer: 99120966.9
(22) Anmeldetag: 03.11.1999
(51) Int. Cl.: B01J 41/14, C08F 257/00, C08F 291/00

(54) **Verfahren zur Herstellung von monodispersen gelförmigen Anionenaustauschern**
Method for producing monodispersed gel-like anion exchangers
Méthode de préparation d'échangeurs anioniques monodispersés sous forme de gel

(30) Priorität: 16.11.1998 DE 19852666
(43) Veröffentlichungstag der Anmeldung: 17.05.2000
(73) Patentinhaber: Bayer Chemicals AG, 51368 Leverkusen (DE)
(72) Erfinder: Podszun, Wolfgang, Dr., 51061 Köln (DE); Klipper, Roland, Dr., 50933 Köln (DE); Martin, Georg, Dr., 40764 Langenfeld (DE); Halle, Olaf, Dr., 51061 Köln (DE); Strüver, Werner, Dr., 51375 Leverkusen (DE); Mitschker, Alfred, Dr., 51519 Odenthal (DE); Seidel, Rüdiger, Dr., 51375 Leverkusen (DE); Feistel, Lothar, 04509 Delitzsch (DE)

(56) Entgegenhaltungen:
- EP-A- 0 601 572
- EP-A- 0 776 911
- EP-A- 0 870 772
- EP-A- 0 964 002
- WO-A-99/54366
- DE-A- 19 634 393
- US-A- 4 585 800

## Beschreibung

Die Erfindung betrifft ein Verfahren zur Herstellung von monodispersen gelförmigen Anionenaustauschern mit hoher Stabilität und Reinheit.

In jüngster Zeit haben Ionenaustauscher mit möglichst einheitlicher Teilchengröße (im folgenden monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können. Monodisperse Ionenaustauscher können durch Funktionalisieren von monodispersen Perlpolymerisaten erhalten werden.

Eine der Möglichkeiten, monodisperse Perlpolymerisate herzustellen, besteht im sogenannten seed/feed-Verfahren, wonach ein monodisperses Polymerisat (Saat") im Monomer gequollen und dieses dann polymerisiert wird. Seed/feed-Verfahren werden beispielsweise in den EP-A-0 098 130 und EP-A-0 101 943 beschrieben.

Die bei Seed-Feed-Verfahren eingesetzten Saatpolymere sollen einen hohen Quellungsindex aufweisen, damit sie beim seed/feed-Verfahren eine große Menge des zugesetzten Monomeren aufnehmen können. Als Quellungsindex (QI) ist der Quotient aus dem Volumen des gequollenen Polymeren und dem Volumen des nicht gequollenen Polymeren definiert. Der Quellungsindex läßt sich in bekannter Weise durch den Gehalt an Vernetzer steuern: niedrige Vernetzergehalte führen zu hohen Quellungsindices und umgekehrt. So weisen beispielsweise Styrolpolymerisate, die mit 0,8 bis 2,0 Gew.-% Divinylbenzol vernetzt sind, Quellungsindices von 8 bis 2,5 in Toluol auf. Niedrig vernetzte Saatpolymerisate haben allerdings einen recht hohen Anteil an nicht vernetzten, löslichen Polymeren. Dieser Anteil an nicht vernetzten, löslichen Polymeren im Saatpolymerisat ist in mehrfacher Hinsicht unerwünscht:
1. Die Polymerisation der gequollenen Saat kann dadurch gestört werden, daß die durch das zugesetzte Monomer aus der Saat herausgelösten Polymeranteile Verklebungen der Partikel untereinander verursachen.
2. Die Funktionalisierung zur Herstellung der Anionenaustauscher kann dadurch erschwert werden, daß die herausgelösten Polymeranteile in den zur Funktionalisierung eingesetzten Reaktionslösungen angereichert werden.
3. Die Anionenaustauscher können erhöhte Mengen an löslichen Polymeren enthalten, was zu einem unerwünschten Ausbluten (leaching) der Ionenaustauscher führen kann.

Ein weiteres Problem der bekannten Anionenaustauscher besteht in ihrer nicht immer ausreichenden mechanischen und osmotischen Stabilität. So können Anionenaustauscherperlen bei der Herstellung oder bei ihrer Verwendung durch auftretende mechanische oder osmotischen Kräfte zerbrechen. Für alle Anwendungen von Anionenaustauschern gilt, daß die in Perlform vorliegenden Austauscher ihren Habitus behalten müssen und nicht während der Anwendung teilweise oder auch gänzlich abgebaut werden oder in Bruchstücke zerfallen dürfen. Bruchstücke und Perlpolymerisatsplitter können während der Anwendung in die zu reinigenden Lösungen gelangen und diese selbst verunreinigen. Ferner ist das Vorhandensein von geschädigten Perlpolymerisaten für die Funktionsweise der in Säulenverfahren eingesetzten Ionenaustauscher selbst ungünstig. Splitter führen zu einem erhöhten Druckverlust des Säulensystems und vermindern damit den Durchsatz an zu reinigender Flüssigkeit durch die Säule.

Die Aufgabe der vorliegenden Erfindung ist die Bereitstellung von monodispersen gelförmigen Anionennaustauschern mit hoher Stabilität und Reinheit.

Unter Reinheit im Sinne der vorliegenden Erfindung ist in erster Linie gemeint, daß die Anionenaustauscher nicht ausbluten. Das Ausbluten äußert sich in einem Anstieg der Leitfähigkeit von mit dem Ionenaustauscher behandeltem Wasser.

Es wurde nun gefunden, daß monodisperse gelförmige Anionenaustauscher mit hoher Stabilität und Reinheit durch ein Saat-Zulauf-Verfahren unter Verwendung von Polymerisaten mit hoher Quellbarkeit bei niedrigem Gehalt an löslichen Polymeranteilen erhalten werden können.

Gegenstand der vorliegenden Erfindung ist ein Verfahren zur Herstellung von monodispersen gelförmigen Anionenaustauschem mit hoher Stabilität und Reinheit umfassend die folgenden Verfahrensschritte:
a) Ausbilden einer Suspension von Saatpolymerisat in einer kontinuierlichen wäßrigen Phase,
b) Quellen des Saatpolymerisates in einem Monomergemisch aus Vinylmonomer, Vernetzer und Radikalstarter,
c) Polymerisieren des Monomergemisches im Saatpolymerisat,
d) Funktionalisieren des gebildeten Copolymerisates durch Chlormethylierung und anschließende Aminierung,
das dadurch gekennzeichnet ist, daß das Saatpolymerisat ein vernetztes Polymerisat mit einem Quellungsindex von 2,5 bis 7,5 (gemessen in Toluol) und mit einem Gehalt an nicht verdampfbaren, löslichen Anteilen (gemessen durch Extraktion mit Tetrahydrofuran) von weniger als 1 Gew.-% ist.

In einer besonderen Ausführungsform der vorliegenden Erfindung wird als Saatpolymerisat ein vernetztes Polymerisat, hergestellt aus
i) 96,5 bis 99,0 Gew.-% Monomer,
ii) 0,8 bis 2,5 Gew.-% Vernetzer und
iii) 0,2 bis 1,0 Gew.-% aliphatischer Peroxyester als Polymerisationsinitiator,
verwendet.

Monomere (i) zur Herstellung des Saatpolymerisates sind Verbindungen mit einer radikalisch polymerisierbaren C=C-Doppelbindung pro Molekül. Bevorzugte Verbindungen dieser Art umfassen aromatische Monomere wie beispielsweise Vinylund Vinylidenderivate des Benzols und des Naphthalins, wie beispielsweise Vinylnaphthalin, Vinyltoluol, Ethylstyrol, α-Methylstyrol, Chlorstyrole, vorzugsweise Styrol, sowie nicht-aromatische Vinyl- und Vinylidenverbindungen, wie beispielsweise Acrylsäure, Methacrylsäure, Acrylsäure-C₁-C₈-alkylester, Methacrylsäure-C₁-Cg-alkylester, Acrylnitril, Methacrylnitril, Acrylamid, Methacrylamid, Vinylchlorid, Vinylidenchlorid und Vinylacetat sowie Gemische aus diesen Monomeren. Vorzugsweise werden die nicht-aromatischen Monomeren in untergeordneten Mengen, vorzugsweise in Mengen von 0,1 bis 50 Gew.-%, insbesondere 0,5 bis 20 Gew.-%, bezogen auf aromatische Monomere, verwendet. In den meisten Fällen wird man jedoch ausschließlich aromatische Monomere verwenden.

Als Vernetzer ii) sind Verbindungen geeignet, die zwei oder mehr, vorzugsweise zwei bis vier radikalisch polymerisierbare Doppelbindungen pro Molekül enthalten. Beispielhaft seien genannt: Divinylbenzol, Divinyltoluol, Trivinylbenzol, Divinylnaphthalin, Trivinylnaphthalin, Diethylenglycoldivinylether, Octadien-1,7, Hexadien-1,5, Ethylenglycoldimethacrylat, Triethylenglycoldimethacrylat, Trimethylolpropantrimethacrylat, Allylmethacrylat und Methylen-N,N'-bisacrylamid. Divinylbenzol wird als Vernetzer bevorzugt. Für die meisten Anwendungen sind kommerzielle Divinylbenzolqualitäten, die neben den Isomeren des Divinylbenzols auch Ethylvinylbenzol enthalten, ausreichend.

Aliphatische Peroxyester iii) zur Herstellung von Saatpolymerisaten entsprechen den Formeln I, II oder III 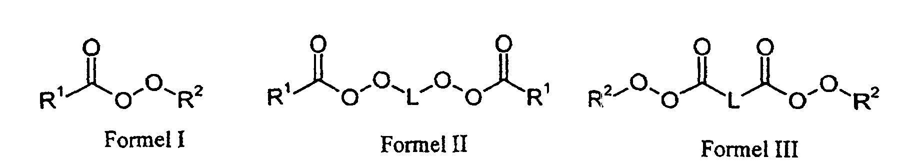 worin
- R¹: für einen Alkylrest mit 2 bis 20 C-Atomen oder einen Cycloalkylrest mit bis zu 20 C-Atomen steht,
- R²: für einen verzweigten Alkylrest mit 4 bis 12 C-Atomen steht und
- L: für einen Alkylrest mit 2 bis 20 C-Atomen oder einen Cycloalkylenrest mit bis zu 20 C-Atomen steht.

Bevorzugte aliphatische Peroxyester gemäß Formel I sind z.B.
tert.-Butylperoxyacetat,
tert.-Butylperoxyisobutyrat,
tert.-Butylperoxypivalat,
tert.-Butylperoxyoctoat,
tert.-Butylperoxy-2-ethylhexanoat,
tert.-Butylperoxyneodecanoat,
tert.-Amylperoxyneodecanoat,
tert.-Amylperoxypivalat,
tert.-Amylperoxyoctoat,
tert.-Amylperoxy-2-ethylhexanoat und
tert. -Amylperoxyneodecanoat.

Bevorzugte aliphatische Peroxyester gemäß Formel II sind z.B.
2,5-Bis(2-ethylhexanoylperoxy)-2,5-dimethylhexan,
2,5-Dipivaloyl-2,5-dimethylhexan und
2,5-Bis(2-neodecanoylperoxy)-2,5-dimethylhexan.

Bevorzugte aliphatische Peroxyester gemäß Formel III sind z.B.
Di-tert.-butylperoxyazelat und
Di-tert.-amylperoxyazelat.

Selbstverständlich können auch Mischungen der vorgenannten Polymerisationsinitiatoren eingesetzt werden.

In einer weiteren besonderen Ausführungsform der vorliegenden Erfindung ist das Saatpolymerisat mikroverkapselt. Dabei ist es besonders vorteilhaft, die Komponenten zur Herstellung des Saatpolymerisates (Monomer (i), Vernetzer (ii) und aliphatischer Peroxyester als Polymerisationsinitiator (III)) mikrozuverkapseln und die mikroverkapselten Partikel zum Saatpolymerisat auszuhärten.

Für die Mikroverkapselung kommen die für diesen Einsatzzweck bekannten Materialien in Frage, insbesondere Polyester, natürliche und synthetische Polyamide, Polyurethane, Polyharnstoffe. Als natürliches Polyamid ist Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von z.B. Maleinsäure, Acrylsäure, Methacrylsäure, Acrylamid und Methacrylamid. Gelatinehaltige Kapseln können mit üblichen Härtungsmitteln wie z.B. Formaldehyd oder Glutardialdehyd gehärtet werden. Die Verkapselung von Monomertröpfchen beispielsweise mit Gelatine, gelatinehaltigen Koazervaten und gelatinehaltigen Komplexkoazervaten, wird in EP-A-0 046 535 eingehend beschrieben. Die Methoden der Verkapselung mit synthetischen Polymeren sind an sich bekannt. Gut geeignet ist beispielsweise die Phasengrenzflächenkondensation, bei der eine im Monomertröpfchen gelöste Reaktivkomponente (z.B. ein Isocyanat oder ein Säurechlorid) mit einer zweiten in der wäßrigen Phase gelösten Reaktivkomponente (z.B. einem Amin) zur Reaktion gebracht wird. Die Mikroverkapselung mit gelatinehaltigem Komplexkoazervat ist bevorzugt.

Die Polymerisation (Aushärtung) der mikroverkapselten Tröpfchen aus Monomer(i), Vernetzer (ii) und aliphatischer Peroxyester (iii) zum Saatpolymerisat erfolgt in wässriger Suspension, wobei es vorteilhaft ist, einen in der wäßrigen Phase gelösten Inhibitor einzusetzen. Als Inhibitoren kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit. Beispiele für organische Inhibitoren sind phenolische Verbindungen wie Hydrochinon, Hydrochinonmonomethylether, Resorcin, Brenzkatechin, tert.-Butylbrenzkatechin, Kondensationsprodukte aus Phenolen mit Aldehyden. Weitere organische Inhibitoren sind stickstoffhaltige Verbindungen wie z.B. Diethylhydroxylamin und Isopropylhydroxylamin. Resorzin wird als Inhibitor bevorzugt. Die Konzentration des Inhibitors beträgt 5 bis 1000, vorzugsweise 10 bis 500, besonders bevorzugt 20 bis 250 ppm, bezogen auf die wäßrige Phase.

Das Saatpolymerisat wird nach der Polymerisation aus der wäßrigen Suspension isoliert und getrocknet, vorzugsweise auf einen Wassergehalt von weniger als 0,5 Gew.-%.

Die Teilchengröße des Saatpolymerisates beträgt 5 bis 500 µm, vorzugsweise 20 bis 400 µm, besonders bevorzugt 100 bis 300 µm. Die Form der Teilchengrößenverteilungskurve muß der des gewünschten Anionenaustauschers entsprechen. Zur Herstellung eines engverteilten bzw. monodispersen Ionenaustauschers wird demnach ein engverteiltes bzw. mondisperses Saatpolymerisat verwendet.

Das getrocknete Saatpolymerisat wird in einer wäßrigen Phase suspendiert, wobei das Verhältnis von Polymerisat und Wasser zwischen 2:1 und 1:20 liegen kann. Bevorzugt wird 1:2 bis 1:10. Die Anwendung eines Hifsmittels, z.B. eines Tensides oder eines Schutzkolloides ist nicht notwendig. Das Suspendieren kann z.B. mit Hilfe eines normalen Rührers erfolgen, wobei niedrige bis mittlere Scherkräfte angewendet werden.

Zu dem suspendierten Saatpolymerisat wird eine Mischung aus Monomer (a), Vernetzer(aa) und Radikalstarter (aaa) (feed") hinzugegeben.

Als Monomer (a) sind die bereits früher genannten Monomere (i), nämlich Styrol, Vinyltoluol, Ethylstyrol, alpha-Methylstyrol, Chlorstyrol, Acrylsäure, Methacrylsäure, Acrylsäurester, Methacrylsäureester, Acrylnitril, Methacrylnitil, Acrylamid, Methacrylamid, sowie Gemische aus diesen Monomeren geeignet. Bevorzugt wird Styrol.

Als Vemetzer (aa) seien Divinylbenzol, Divinyltoluol, Trivinylbenzol, Divinylnaphtalin, Trivinylnaphtalin, Diethylenglycoldivinylether, Octadien-1,7, Hexadien-1,5, Ethylenglycoldimethacrylat, Triethylenglycoldimethacrylat, Trimethylolpropantrimethachrylat, Allylmethacrylat und Methylen-N,N'-bisacrylamid. Divinylbenzol wird bevorzugt. Für die meisten Anwendungen sind kommerzielle Divinylbenzolqualitäten, die neben den Isomeren des Divinylbenzols auch Ethylvinylbenzol enthalten, ausreichend.

Der Gehalt an Vernetzer im Monomergemisch beträgt 1 bis 20 Gew.-%, vorzugsweise 4 bis 12 Gew.-%.

Für das erfindungsgemäße Verfahren geeignete Radikalstarter (aaa) sind z.B. Peroxyverbindungen wie Dibenzoylperoxid, Dilaurylperoxid, Bis(p-chlorbenzoylperoxid), Dicyclohexylperoxydicarbonat, tert.-Butylperoctoat, 2,5-Bis(2-ethylhexanoylperoxy)-2,5-dimethylhexan und tert.-Amylperoxy-2-etylhexan, desweiteren Azoverbindungen wie 2,2'-Azobis(isobutyronitril) und 2,2'-Azobis(2-methylisobutyronitril). Die Radikalstarter werden im allgemeinen in Mengen von 0,05 bis 2,5, vorzugsweise 0,2 bis 1,5 Gew.-%, bezogen auf die Mischungen aus Monomer (a) und Vernetzer (aa), angewendet.

Das Verhälnis von Saatpolymerisat zu zugesetzter Mischung (seed/feed-Verhältnis) beträgt im allgemeinen 1:0,5 bis 1:20, vorzugsweise 1:0,75 bis 1:10, besonders bevorzugt 1:1 bis 1:5. Die zugesetzte Mischung quillt in das Saatpolymerisat ein. Die maximale feed-Menge, die von der Saat vollständig aufgenommen wird, hängt in starkem Maße vom Vernetzergehalt der Saat ab. Bei gegebener Teilchengröße des Saatpolymerisates läßt sich durch das seed/feed-Verhältnis die Teilchengröße des entstehenden Copolymerisates bzw. des Ionenaustauschers einstellen.

Die Polymerisation des gequollenen Saatpolymerisats zum Copolymerisat erfolgt in Anwesenheit eines oder mehrerer Schutzkolloide und gegebenenfalls eines Puffersystems. Als Schutzkolloide sind natürliche und synthetische wasserlösliche Polymere, wie z.B. Gelatine, Stärke, Polyvinylalkohol, Polyvinylpyrrolidon, Polyacrylsäure, Polymethacrylsäure und Copolymerisate aus (Meth)acrylsäure und (Meth)-acrylsäureestern. Sehr gut geeignet sind auch Cellulosederivate, insbesondere Celluloseester und Celluloseether, wie Carboxymethylcellulose und Hydroxyethylcellulose. Cellulosederivate sind als Schutzkolloid bevorzugt. Die Einsatzmenge der Schutzkolloide beträgt im allgemeinen 0,05 bis 1 Gew.-%, bezogen auf die Wasserphase, vorzugsweise 0,1 bis 0,5 Gew.-%.

Die Polymerisation kann in Anwesenheit eines Puffersystems durchgeführt werden. Bevorzugt werden Puffersysteme, die den pH-Wert der Wasserphase bei Beginn der Polymerisation auf einen Wert zwischen 14 und 6, vorzugsweise zwischen 13 und 9 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflußt. Besonders gut geeignete Puffersysteme enthalten Phosphat- oder Boratsalze.

Das Verhältnis von organischer Phase zur Wasserphase beträgt bei der Polymerisation der gequollenen Saat 1:1 bis 1:20, vorzugsweise 1:1,5 bis 1:10.

Die Temperatur bei der Polymerisation des gequollenen Saatpolymerisates richtet sich nach der Zerfallstemperatur des eingesetzten Initiators (aaa). Sie liegt im allgemeinen zwischen 50 bis 150°C, vorzugsweise zwischen 55 und 130°C, besonders bevorzugt 60 bis 100°C. Die Polymerisaton dauert 1 bis einige Stunden. Es hat sich bewährt, ein Temperaturprogram anzuwenden, bei dem die Polymerisation bei niedriger Temperatur, beispielsweise 60°C begonnen wird und mit fortschreitendem Polymerisationsumsatz die Reaktionstemperatur gesteigert wird. Auf diese Weise läßt sich beispielsweise die Forderung nach sicherem Reaktionsverlauf und hohem Polymerisationsumsatz sehr gut erfüllen.

Nach der Polymerisation kann das Copolymerisat mit üblichen Methoden z.B. durch Filtrieren oder Dekantieren isoliert und gegebenenfalls nach ein oder mehreren Wäschen getrocknet und falls gewünscht gesiebt werden.

Die Umsetzung der Copolymerisate zum Anionenaustauscher erfolgt durch Chlormethylierung und anschließende Aminierung.

Zur Chlormethylierung wird vorzugsweise Chlormethylmethylether eingesetzt. Der Chlormethylmethylether kann in ungereinigter Form eingesetzt werden, wobei er als Nebenkomponenten beispielsweise Methylal und Methanol enthalten kann. Der Chlormethylmethylether wird im Überschuß eingesetzt und wirkt nicht nur als Reaktant sondern auch als Lösungs- und Quellmittel. Die Anwendung eines zusätzlichen Lösungsmittels ist daher im allgemeinen nicht erforderlich. Die Chlormethylierungsreaktion wird durch Zugabe einer Lewissäure katalysiert. Geeignete Katalysatoren sind z.B. Eisen(III)chlorid, Zinkchlorid, Zinn(IV)chlorid und Aluminiumchlorid. Die Reaktionstemperatur kann im Bereich von 40 bis 80°C liegen. Bei druckloser Fahrweise ist ein Temperaturbereich von 50 bis 60°C besonders günstig. Während der Reaktion können die flüchtigen Bestandteile, wie Salzsäure, Methanol, Methylal, Formaldehyd und teilweise Chlormethylmethylether durch Abdampfen entfernt werden. Zur Entfernung des Rest Chlormethylmethylether sowie zur Reinigung des Chlormethylats kann mit Methylal, Methanol und schließlich mit Wasser gewaschen werden. Es hat sich gezeigt, daß beim erfindungsgemäßen Verfahren im überschüssigen Chlormethylmethylether nur sehr wenig Polymerbestandteile enthalten sind. Polymerbestandteile die aus dem Copolymerisat herausgelöst wurden, sind unerwünscht, da sie die Rückführung und Wiederverwendung des überschüssigen Chlormethylmethylethers erschweren.

Zur Herstellung von schwachbasischen Anionenaustauschern wird das chlormethylierte Copolymerisat mit Ammoniak, einem primären Amin wie Methyl- oder Ethylamin oder einem sekundären Amin wie Dimethylamin umgesetzt.

Die Umsetzung mit tertiären Aminen führt zu starkbasischen Anionenaustauschern. Geeignete tertiären Amine sind Trimethylamin, Dimethylaminoethanol, Triethylamin, Tripropylamin und Tributylamin.

Zur vollständigen Umsetzung des chlormethylierten Copolymerisates sind mindestens 1 mol Amin, bezogen auf 1 mol Chlor im Chlormethylat erforderlich. Bevorzugt wird ein leichter Aminüberschuß. Besonders bevorzugt sind 1,1 bis 1,3 mol Amin pro mol Chlor.

Die Aminierungsreaktion erfolgt in Anwesenheit von Wasser. Dabei erfüllt das Wasser verschiedene Aufgaben. Es ist Rührmedium, Reaktionsmedium, Lösemittel für das Amin und Quellmittel für den entstehenden Anionenaustauscher. Während der Aminierung nimmt das Harz kontinuierlich Wasser auf und quillt hierbei auf. Daher ist eine Mindestmenge an Wasser notwendig, um den Ansatz rührfähig zu halten. Es gibt keine besondere Obergrenze an Wasser. Allerdings sind sehr hohe Wassermengen ungünstig, da infolge der Verdünnung die Raum/Zeit-Ausbeute erniedrigt wird. Pro Gramm chlormethyliertes Copolymerisat sollen mindestens 1,5 Gramm, bevorzugt 2 bis 4 Gramm Wasser eingesetzt werden.

Das Reaktionsgemisch kann untergeordnete Mengen an Lösungsmittel, wie Alkohol enthalten. So ist es nicht störend, wenn ein methanolfeuchtes chlormethyliertes Copolymerisat eingesetzt. wird. Vorzugsweise wird jedoch kein organisches Lösemittel zugesetzt.

In einer besonderen Ausführungsform der vorliegenden Erfindung wird die Aminierung in Gegenwart von im Wasser gelöstem anorganischem Salz durchgeführt. Geeignete Salze sind wasserlösliche Halogenide, Carbonate und Sulfate von Alkalimetallen wie Natrium und Kalium und von Erdalkalimetallen wie Magnesium und Calcium. Bevorzugt wird Natriumchlorid eingesetzt.

Das anorganische Salz wird in einer Menge von weniger als 5 Gewichtsprozent, bezogen auf die Gesamtmenge Wasser eingesetzt. Bevorzugt werden 1 bis 4,5 Gew.-%, insbesondere bevorzugt 1,5 bis 4 Gew.-%, anorganisches Salz, bezogen auf die Gesamtmenge Wasser, eingesetzt. Die Gesamtmenge Wasser ergibt sich aus der Summe an zugesetztem Wasser und der in der wäßrigen Aminlösung eingebrachten Wassermenge.

Die Temperatur, bei der die Aminierung durchgeführt wird, kann im Bereich zwischen Raumtemperatur und 160°C liegen. Bevorzugt werden bei Temperaturen zwischen 70 und 120°C, besonders bevorzugt im Bereich zwischen 70 und 110°C, verwandt.

Nach der Aminierung wird der erhaltene Anionenaustauscher mit Wasser gewaschen und anschließend in verdünnter Salzsäure (1 bis 10 %ig) bei Temperaturen von 20 bis 120°C, vorzugsweise von 50 bis 90°C behandelt. Das Produkt wird beispielsweise durch Absetzen lassen oder Filtrieren isoliert und zur weiteren Reinigung mit Wasser gewaschen.

Selbstverständlich können die erfindungsgemäßen Anionenaustauscher auf bekanntem Wege durch Austausch des Chloridions gegen ein anderes Gegenion in andere Formen überführt werden.

Die nach dem erfindungsgemäßen Verfahren erhaltenen Anionenaustauscher zeichnen sich durch eine besonders hohe Stabilität und Reinheit aus. Sie zeigen auch nach längerem Gebrauch und vielfacher Regeneration keine Defekte an den Ionenaustauscherperlen und ein deutlich verringertes Ausbluten (Leaching) des Austauschers.

### Beispiele

### Untersuchungsmethoden:

### Nicht verdampfbare lösliche Anteile von Saatpolymerisat

Zur Bestimmung der löslichen Anteile wurden 5 bis 7 g Saatpolymerisat in eine Extraktionshülse eingewogen und über Nacht in einer Soxhlet-Apperatur mit 800 ml Toluol extrahiert (Badtemperatur: 140°C). Das Extrakt wurde über eine Nutsche mit Schwarzbandfilter filtriert und am Rotationsverdampfer auf ca. 1 ml eingeengt. Anschließend wurden 300 ml Methanol zugesetzt und im Vakuum am Rotationsverdampfer bis zur Gewichtskonstanz getrocknet. Von jeder Probe wurde eine Doppelbestimmung durchgeführt.

### Quellung von Saatpolymerisat

Die Quellung der Saatpolymerisate wurde in Toluol untersucht. Dazu wurden 10 ml getrocknetes, gesiebtes Perlpolymerisat in einem 100 ml-Standzylinder eingewogen. Der Standzylinder wurde mit dem Quellmittel auf 100 ml aufgefüllt und 10 bis 20 h stehen gelassen. Dabei wurde öfter geschüttelt und darauf geachtet, daß eventuell auftretende Luftblasen entweichen können. Das Volumen der gequollenen Schüttung wurde abgelesen und ergab V₁. Der Quotient aus V₁ und dem Volumen der Schüttung aus nicht gequollenen Perlen V₀ ist definitionsgemäß der Quellungsindex (QI).

### Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Quellungsstabilitätstest

In eine Säule aus Polycarbonat-Kunststoff, Länge 540 mm, Durchmesser 19 mm, mit Siebeinsätzen im Kopf und Boden, Maschenweite 0,3 mm, werden 25 ml Anionenaustauscher in der Chloridform eingefüllt. Das Harz wird von unten 5 Minuten lang mit 500 ml entionisiertem Wasser gespült. Dann wird nacheinander mit 500 ml 4 gew.-%ige wäßrige Natronlauge, 500 ml entionisiertem Wasser, 500 ml 6 gew.-%ige Salzsäure und 500 ml entionisiertes Wasser behandelt, wobei die Natronlauge und die Salzsäure von oben in je 10 Minuten durch das Harz fließen und das entionisierte Wasser von unten in je 5 Minuten durch das Harz gepumpt wird. Die Behandlung erfolgt zeitgetaktet über ein Steuergerät. Ein Arbeitszyklus dauert 1 h. Es werden 20 Arbeitszyklen durchgeführt. Nach Ende der Arbeitszyklen werden von dem Harzmuster 100 Perlen ausgezählt. Ermittelt wird die Anzahl der perfekten Perlen, die nicht durch Risse oder Absplitterungen geschädigt sind.

### Beispiel 1 (Vergleichsbeispiel)

Entsprechend Beispiel 2 der DE-19 634 393 wurde ein Copolymerisat hergestellt. Dieses wurde nach der in Beispiel 9 der DE-19 634 393 beschriebenen Methode chlormethyliert. Dabei wurden aus dem Filtrat des Reaktionsgemisches ca. 20 g Oligomere pro 1000 g Polymerisat mit einem Überschuß an Methanol gefällt. Das chlormethylierte Copolymerisat wurde nach der in Beispiel 10 der DE-19 634 393 beschriebenen Methode durch Aminierung mit Trimethylamin in einen starkbasischen Anionenaustauscher überführt.

| | |
|---|---|
| Anzahl perfekter Perlen nach Herstellung | 94/100 |
| Anzahl perfekter Perlen nach Quellungsstabilitätstest | 82/100 |

### Beispiel 2 (erfindungsgemäß)

### a) Herstellung eines Saatpolymerisates

In einem 4 l Glasreaktor werden 1960 ml entionisiertes Wasser vorgelegt. Hierin werden 630 g einer mikroverkapselten Mischung aus 1,0 Gew.-% Divinylbenzol, 0,6 Gew.-% Ethylstyrol (eingesetzt als handelsübliches Gemisch aus Divinylbenzol und Ethylstyrol mit 63 Gew.-% Divinylbenzol), 0,5 Gew.-% tert.-Butylperoxy-2-ethylhexanoat und 97,9 Gew.-% Styrol gegeben, wobei die Mikrokapsel aus einem mit Formaldehyd gehärteten Komplexkoazervat aus Gelatine und einem Acrylamid/Acrylsäure-Copolymerisat besteht. Die mittlere Teilchengröße beträgt 231 µm. Die Mischung wird mit einer Lösung aus 2,4 g Gelatine, 4 g Natriumhydrogenphosphatdodekahydrat und 100 mg Resorcin in 80 ml entionisiertem Wasser versetzt, langsam gerührt und unter Rühren 10 h bei 75°C polymerisiert. Anschließend wird durch Temperaturerhöhung auf 95°C auspolymerisiert. Der Ansatz wird über ein 32 µm-Sieb gewaschen und getrocknet. Man erhält 605 g eines kugelförmigen, mikroverkapselten Polymerisats mit glatter Oberfläche. Die Polymerisate erscheinen optisch transparent; die mittlere Teilchengröße beträgt 220 µm. Das Saatpolymerisat hat einen Volumen-Quellungsindex von 4,7 und lösliche Anteile von 0,45 %.

### b) Herstellung eines Copolymerisates

In einem 4 l Glasreaktor werden 416,9 g Saatpolymerisat aus (a) und eine wäßrige Lösung aus 1100g entionisiertem Wasser, 3,6 g Borsäure und 1 g Natriumhydroxid eingefüllt und die Rührgeschwindigkeit auf 220 upm (Umdrehungen pro Minute) eingestellt. Innerhalb von 30 min wird ein Gemisch aus 713,4 g Styrol, 56 g Divinylbenzol, 14 g Ethylstyrol (gemeinsam eingesetzt als handelsübliches Gemisch aus Divinylbenzol und Ethylstyrol mit 80,0% Divinylbenzol) und 6,3 g Dibenzoylperoxid (75 gew.%ig, wasserfeucht) als feed zugesetzt. Das Gemisch wird 60 min bei Raumtemperatur gerührt, wobei der Gasraum mit Stickstoff gespült wird. Danach wird eine Lösung von 2.4 g Methylhydroxyethylcellulose in 120 g entionisiertem Wasser zugesetzt. Der Ansatz wird nun auf 63°C aufgeheizt und 11 Stunden bei dieser Temperatur belassen, anschließend wird 2 Stunden auf 95°C erwärmt. Der Ansatz wird nach dem Abkühlen gründlich über ein 40 µm-Sieb gewaschen mit entionisiertem Wasser gewaschen und dann 18 Stunden bei 80°C im Trockenschrank getrocknet. Man erhält 1150 g eines kugelförmigen, Copolymerisats mit einer Teilchengröße von 370 µm.

### c) Chlormethylierung des Copolymerisates

In einem 3 l Sulfierbecher wird eine Mischung aus 1600 g Monochlordimethylether, 165 g Methylal und 5 g Eisen(III)chlorid vorgelegt und anschließend 300 g Copolymerisat aus b) zugegeben. Das Gemisch wird 30 min bei Raumtemperatur stehen gelassen und in 3 h auf Rückflußtemperatur (55 bis 59°C) erhitzt. Anschließend rührt man weitere 1,75 h unter Rückfluß nach. Während der Reaktionszeit werden ca. 275 g Salzsäure und leichtsiedende Organika abgetrieben. Anschließend wird die dunkelbraune Reaktionssuspension abfiltriert, das erhaltene Produkt mit einer Mischung aus Methylal und Methanol, anschließend mit Methanol, dann mit entionisiertem Wasser, intensiv gewaschen. Man erhält 680 g wasserfeuchtes, chlormethyliertes Perlpolymerisat.
Chlorgehalt: 18,8 %.
Dabei wurden aus dem Filtrat des Reaktionsgemisches ca. 8 bis 10 g Oligomere pro 1000 g Polymerisat mit einem Überschuß an Methanol gefällt.
100 ml nutschfeuchtes Chlormethylat wiegen 65,9 g. Sie enthalten 12,45 g Chlor entsprechend 0,351 mol.

### d) Herstellung eines starkbasischen Ionenaustauschers

Im Autoklav werden 803 ml entionisiertes Wasser vorgelegt. Darin löst man 19,4 g Natriumchlorid. Dazu werden 430 ml nutsch(wasser)feuchtes, chlormethyliertes Perlpolymerisat (entsprechend 283,4 g trockenes, chlormethyliertes Perlpolymerisat mit einem Chlorgehalt von 18,8 Gew.-%) und 276,6 g 40,4 gew.-%ige wäßrige Trimethylaminlösung gegeben. Die Suspension wird in 1,5 h auf 70°C erhitzt, weitere 2 Stunden bei 70°C gerührt, auf 80°C in 1 Stunde erhitzt und weitere 2 Stunden bei 80°C erhitzt. Nach dem Abkühlen auf Raumtemperatur wird die Mutterlauge abgesaugt, das Harz wird mit 800 ml entionisiertem Wasser versetzt und 30 min bei Raumtemperatur gerührt. Das Wasser wird abgetrennt und durch 2000 ml 3 gew.-%ige wäßrige Salzsäure ersetzt. Die Suspension wird 4 h bei 70°C gerührt. Nach dem Abkühlen wird die Flüssigkeit abgetrennt, das Harz wird mit Wasser aufgenommen und in einer Säule von unten mit 6 Bettvolumina entionisiertem Wasser eluiert.

Man erhält 1208 ml Anionenaustauscherperlen in der Chloridform

| | |
|---|---|
| Anzahl perfekter Perlen nach Herstellung | 98/100 |
| Anzahl perfekter Perlen nach Quellungsstabilitätstest | 94/100 |

Sowohl unmittelbar nach Herstellung als auch nach dem Quellungsstabilitätstest sind mehr perfekte Perlen vorhanden als beim Vergleichsbespiel.

### Beispiel 3 (erfindungsgemäß)

### d) Herstellung eines starkbasischen Ionenaustauschers

Im Autoklav werden 1013 ml entionisiertes Wasser vorgelegt. Darin löst man 40,5 g Natriumchlorid. Dazu werden 450 ml nutsch(wasser)feuchtes, chlormethyliertes Perlpolymerisat aus Beispiel 2c (entsprechend 296,6 g trockenes, chlormethyliertes Perlpolymerisat mit einem Chlorgehalt von 18,8 Gew.-%) und 176 g Dimethylaminoethanol gegeben. Die Suspension wird in 3 h auf 110°C erhitzt und weitere 3 Stunden bei 110°C gerührt. Nach dem Abkühlen auf Raumtemperatur wird die Mutterlauge abgesaugt, das Harz wird mit 800 ml entionisiertem Wasser versetzt und 30 min bei Raumtemperatur gerührt. Das Wasser wird abgetrennt und durch 1254 ml 3 gew.-%ige wäßrige Salzsäure ersetzt. Die Suspension wird 4 h bei 70°C gerührt. Nach dem Abkühlen wird die Flüssigkeit abgetrennt, das Harz wird mit Wasser aufgenommen und in einer Säule von unten mit 6 Bettvolumina entionisiertem Wasser eluiert. Man erhält 1240 ml Anionenaustauscherperlen in der Chloridform.

| | |
|---|---|
| Anzahl perfekter Perlen nach Herstellung | 98/100 |
| Anzahl perfekter Perlen nach Quellungsstabilitätstest | 95/100 |

Sowohl unmittelbar nach Herstellung als auch nach dem Quellungsstabilitätstest sind mehr perfekte Perlen vorhanden als beim Vergleichsbespiel.

## Patentansprüche

1. Verfahren zur Herstellung von monodispersen gelförmigen Anionenaustauschern mit hoher Stabilität und Reinheit durch
a) Ausbilden einer Suspension von Saatpolymerisat in einer kontinuierlichen wäßrigen Phase,
b) Quellen des Saatpolymerisates in einem Monomergemisch aus Vinylmonomer, Vernetzer und Radikalstarter
c) Polymerisieren des Monomergemisches im Saatpolymerisat,
d) Funktionalisieren des gebildeten Copolymerisates durch Chlormethylierung und Aminierung,
**dadurch gekennzeichnet, daß** das Saatpolymerisat ein vernetztes Polymerisat mit einem Quellungsindex von 2,5 bis 7,5 (gemessen in Toluol) und mit einem Gehalt an nicht verdampfbaren, löslichen Anteilen von weniger als 1 Gew.-% (gemessen durch Extraktion mit Tetrahydrofuran) ist.

2. Verfahren zur Herstellung von monodispersen gelförmigen Anionenaustauschem gemäß Anspruch 1, **dadurch gekennzeichnet, daß** das Saatpolymerisat ein vemetztes Polymerisat, hergestellt aus
i) 96,5 bis 99,0 Gew.-% Monomer,
ii) 0,8 bis 2,5 Gew.-% Vernetzer und
ii) 0,2 bis 1,0 Gew.-% aliphatischer Peroxyester als Polymerisationsinitiator,
ist.

3. Verfahren zur Herstellung von monodispersen gelförmigen Anionenanstauschem gemäß Anspruch 2, **dadurch gekennzeichnet, daß** der aliphatische Peroxyester den Formeln I, II oder III 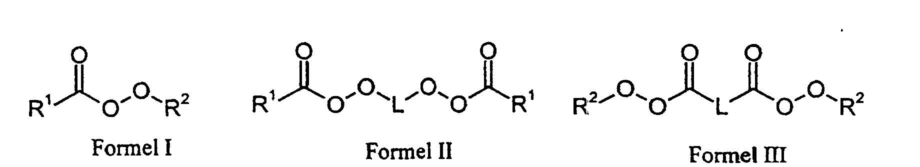 entspricht, worin
R¹ für einen Alkylrest mit 2 bis 20 C-Atomen oder einen Cycloalkylrest mit bis zu 20 C-Atomen steht,
R² für einen verzweigten Alkylrest mit 4 bis 12 C-Atomen steht und
L für einen Alkylrest mit 2 bis 20 C-Atomen oder einen Cycloalkylenrest mit bis zu 20 C-Atomen steht.

4. Verfahren zur Herstellung von monodispersen gelförmigen Anionenaustauschem gemäß Anspruch 1, **dadurch gekennzeichnet, daß** das Saatpolymerisat mikroverkapselt ist.

5. Verfahren gemäß Anspruch 1, **dadurch gekennzeichnet, daß** die Aminierung in Gegenwart von weniger als 5 Gew.-%, bezogen auf die Gesamtmenge Wasser, eines anorganischen Salzes erfolgt.

## Claims

1. Process for producing monodisperse anion-exchanger gels with high stability and purity by
a) forming a suspension of seed polymer in a continuous aqueous phase,
b) swelling the seed polymer in a monomer mixture made from vinyl monomer, crosslinker and free-radical initiator,
c) polymerizing the monomer mixture in the seed polymer,
d) functionalizing the resultant copolymer by chloromethylation and amination,
**characterized in that** the seed polymer is a crosslinked polymer with a swelling index of from 2.5 to 7.5 (measured in toluene) and with less than 1% by weight (measured by extraction with tetrahydrofuran) of non-vaporizable, soluble fractions.

2. Process for producing monodisperse anion-exchanger gels according to Claim 1, **characterized in that** the seed polymer is a crosslinked polymer prepared from
i) from 96.5 to 99.0% by weight of monomer,
ii)from 0.8 to 2.5% by weight of crosslinker and
iii) from 0.2 to 1.0% by weight of aliphatic peroxyester as polymerization initiator.

3. Process for producing monodisperse anion-exchanger gels according to Claim 2, **characterized in that** the aliphatic peroxyester has the formulae I, II or III, 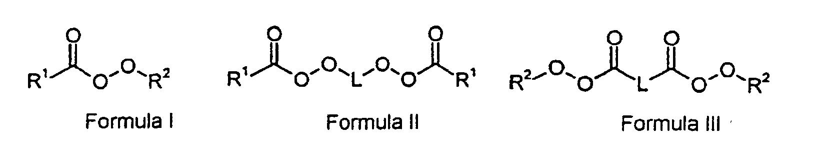 where
R¹ is an alkyl radical having from 2 to 20 carbon atoms or a cycloalkyl radical having up to 20 carbon atoms,
R² is a branched alkyl radical having from 4 to 12 carbon atoms and
L is an alkylene radical having from 2 to 20 carbon atoms or a cycloalkylene radical having up to 20 carbon atoms.

4. Process for producing monodisperse anion-exchanger gels according to Claim 1, **characterized in that** the seed polymer has been microencapsulated.

5. Process according to Claim 1, **characterized in that** the amination takes place in the presence of less than 5% by weight, basec on the total amount of water, of an inorganic salt.

## Revendications

1. Procédé pour la préparation d'échangeurs d'anions monodispersés en forme de gel avec une stabilité et une pureté élevées par
a) formation d'une suspension de polymère germe dans une phase aqueuse continue,
b) gonflement du polymère germe dans un mélange monomère constitué de monomère vinylique, d'agent de réticulation et d'initiateur radicalaire,
c) polymérisation du mélange monomère dans un polymère de germe,
d) fonctionnalisation du copolymère formé par chlorométhylation et amination,
**caractérisé en ce que** le polymère germe est un polymère réticulé avec un indice de gonflement de 2,5 à 7,5 (mesuré dans du toluène) et avec une teneur en parts solubles non évaporables inférieure à 1 % en poids (mesurée par extraction avec du tétrahydrofurane).

2. Procédé pour la préparation d'échangeurs d'anions monodispersés en forme de gel selon la revendication 1, **caractérisé en ce que** le polymère germe est un polymère réticulé préparé à partir de
i) 96,5 à 99,0 % en poids de monomère,
ii) 0,8 à 2,5 % en poids d'agent de réticulation et
iii) 0,2 à 1,0 % en poids de peroxyester aliphatique comme initiateur de polymérisation.

3. Procédé pour la préparation d'échangeurs d'anions monodispersés en forme de gel selon la revendication 2, **caractérisé en ce que** le peroxyester aliphatique correspond aux formules I, II ou III 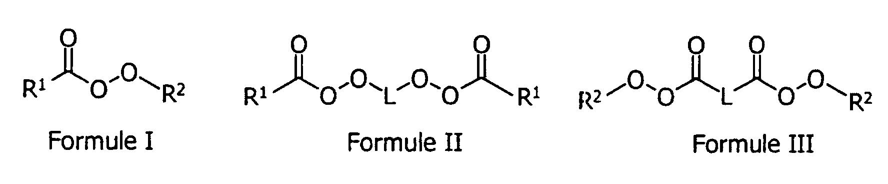 dans lesquelles
R¹ représente un reste alkyle avec de 2 à 20 atomes de C ou un reste cycloalkyle avec jusqu'à 20 atomes de C,
R² représente un reste alkyle ramifié avec de 4 à 12 atomes de C et
L représente un reste alkyle avec de 2 à 20 atomes de C ou un reste cycloalkylène avec jusqu'à 20 atomes de C.

4. Procédé pour la préparation d'échangeurs d'anions monodispersés en forme de gel selon la revendication 1, **caractérisé en ce que** le polymère germe est microencapsulé.

5. Procédé selon la revendication 1, **caractérisé en ce que** l'amination est réalisée en présence de moins de 5 % en poids, rapportés à la quantité totale d'eau, d'un sel inorganique.
